# EUROPEAN PATENT APPLICATION

(11) **EP 1 065 661 A2**
(43) Date of publication of application: **03.01.2001**
(21) Application number: 00113149.9
(22) Date of filing: 29.06.2000
(51) Int. Cl.: G11B 7/09, G11B 11/105

(54) **Apparatus and method for automatically adjusting bias voltage of focus error signal**

(30) Priority: 30.06.1999 JP 18667899
(71) Applicant: Pioneer Corporation, Meguro-ku, Tokyo (JP)
(72) Inventor: Abe, Shinichiro, Pioneer Corp., Kawagoe Works, Kawagoe-shi, Saitama-ken (JP); Iijima, Takayuki, Pioneer Corp., Kawagoe Works, Kawagoe-shi, Saitama-ken (JP); Yamanoi, Katsuaki, Pioneer Corp., Kawagoe Works, Kawagoe-shi, Saitama-ken (JP); Miyagawa,Tomoko, Pioneer Corp., Kawagoe Works, Kawagoe-shi, Saitama-ken (JP); Oogami, Kazuhiko, Pioneer Corp., Kawagoe Works, Kawagoe-shi, Saitama-ken (JP); Shumura, Yoji, Pioneer Corp., Kawagoe Works, Kawagoe-shi, Saitama-ken (JP); Matsumoto, Hiroyuki, Pioneer Corp., Kawagoe Works, Kawagoe-shi, Saitama-ken (JP)
(74) Representative: Klingseisen, Franz, Dipl.-Ing.

(57) **Abstract**

An apparatus (100) for adjusting a bias voltage of a focus error signal provided with: an detecting device (10) for detecting a position available to adjust the bias voltage of the focus error signal on the basis of an index information to indicate the relationship between information recorded on the information recording medium (21) and its recording position, an movement control device (10) for controlling of movement where a pick up (2) moves to the area available to adjust corresponding to a position of the pick up (2), and an adjust device (10) for starting to adjust the bias voltage from the position available to adjust.

## Description

### BACKGROUND OF THE INVENTION

### 1. Field of the Invention

The present invention relates to apparatus for adjusting bias of a focus error signal automatically, which is provided in an apparatus for reproducing information recorded on an optical disk such as a mini disk (hereafter called MD), and recording information on the optical disk.

### 2. Description of the Related Art

A compact disk (hereafter called CD) has been used as an optical disk on which sound information or various data is recorded. In recent years, however, an MD has become as popular as a CD is, because the MD is smaller than the CD but has equivalent reproducing time as the CD has, and is available to be recorded information on it.

In the MD, magnetic modulation scheme is adopted. If a portion of a magnetic membrane of the MD is irradiated onto by a laser beam and magnetized by a magnetic head, digital signals "1" and "0" are converted to magnetic polarities "N" and "S" and are recorded.

On the other hand, during reproduction, if the above-mentioned recording surface, Kerr effect is generated on it. The plane of polarization of reflecting light slightly rotates counterclockwise or clockwise in accordance with the magnetic polarities "N" and "S". An optical pick up includes two photoreceptor devices. When the reflecting light passes through a polarization beam splitter, the amount of split to the two photoreceptor devices varies with the planes of polarization rotating in accordance with the magnetic polarity "N" or "S". Therefore digital signal "1" or "0" is available to read by obtaining the difference of output between the two photoreceptor devices in an RF amplifier.

As mentioned above, in the MD it is necessary to obtain correct focus of the laser beam on the recording surface of the MD in order to record and read information. Therefore, in an MD recording/reproducing device or an MD reproducing, a focus servo control is executed by using a focus error signal, which is generated by reflection beam from the MD.

The optical pick up has a photoreceptor which is divided into four parts. However, a secular variation of the photoreceptor and the like make a difference of sensitivity between the parts. In another case the focus servo may became closed under the condition that focus is not achieved at the recording surface of the MD due to misalignment of an optical system in the MD recording/reproducing device in early stages of manufacturing. In this case if the focus servo may became closed, the light beam does not come into a focus on the recording surface. Therefore a focus error is occurred.

If the focus error is occurred, it is not possible to execute focus servo with accuracy according to an RF signal. As a result that brings on declining S/N ratio, so that it is not possible to reproduce information with accuracy.

Consequently, in the conventional manner, a bias voltage which is combined to a focus error signal is adjusted on the basis of properties that is obtained according to an RF signal outputted when a light beam is intentionally moved perpendicular to the recording surface of the MD from focus position during inspection process.

However, the above-mentioned conventional adjustment of bias voltage is done by an operator at the time of manufacturing the MD recording/reproducing device and the like, so that there are variations in the amount of adjustment and in properties of a focus servo control.

Further, the standard disc is used for the adjustment, so that if there is the difference of properties between the standard disc and the disc a user actually uses, the bias voltage may become inappropriate even though it was appropriate at the time of the adjustment.

In order to solve that kind of problem, the MD recording/reproducing device having the device to adjust the bias voltage automatically and respectively is developed.

However, in the recordable MD if the recording surface has a dust, a damage or the like in one portion, recording is executed by skipping the portion. Therefore, In that MD there is the portion recorded no information. An RF signal is not obtained from the portion, so that the adjustment of the bias voltage as mentioned above is not appropriate.

### SUMMARY OF THE INVENTION

It is therefore an object of the present invention to provide bias adjustment apparatus for adjusting a bias voltage of a focus error signal automatically if there are a dust, a damage and the like on the recording surface of MD.

The above object of the present invention can be achieved by an apparatus for adjusting a bias voltage of a focus error signal. The apparatus for adjusting the bias voltage is provided with: an detecting device for detecting a position available to adjust the bias voltage of the focus error signal on the basis of an index information to indicate the relationship between information recorded on the information recording medium and its recording position; an movement control device for controlling of movement where a pick up moves to the area available to adjust corresponding to a position of the pick up; and an adjust device for starting to adjust the bias voltage from the position available to adjust.

According to the apparatus for adjusting a bias voltage of a focus error signal, the detecting device detects a position available to adjust the bias voltage of the focus error signal on the basis of an index information to indicate the relationship between information recorded on the information recording medium and its recording position. Then the movement control device controls the movement where a pick up moves to the area available to adjust corresponding to a position of the pick up. For example, if the present position of the pick up is not in the position available to adjust, the movement control device moves the pick up to the position available to adjust. If the present position of the pick up is in the position available to adjust, the movement control device does not move the pick up. Further the adjust device starts to adjust the bias voltage from the position available to adjust, e.g., by using RF signal which is obtained on the basis of reflected light from the position.

Therefore the pick up is always placed on the position available to adjust, so that if the information recording medium has a recording area where no information is recorded is used for the apparatus, the adjustment is adequately executed at each information recording medium.

In one aspect of the apparatus for adjusting a bias voltage of a focus error signal, a discrimination device discriminates varieties of the information recording medium. Then if a result of the discrimination indicates that the information recording medium is a recordable medium, a control device controls the detection of the position available to adjust by the detecting device, the control of the movement by the movement control device, and the adjustment of the bias voltage at the position available to adjust and following area by the adjust device .

According to this aspect, the pick up is always placed on the position available to adjust, so that if the information recording medium has a recording area where no information is recorded is used for the apparatus, the adjustment is adequately executed at each information recording medium.

In another aspect of the apparatus for adjusting a bias voltage of a focus error signal, if a result of the discrimination indicates that the information recording medium is a read-only medium, the control device controls the adjust device such that the adjustment is executed at the position available to adjust where the pick up exists at the time of the discrimination.

According to this aspect, the pick up is always placed on the position available to adjust, the adjustment is adequately executed at each read-only medium which has a recording area where information is recorded.

In another aspect of the apparatus for adjusting a bias voltage of a focus error signal, the control device controls the devices such that processing on the basis of a result of the discrimination by the discrimination device is executed every time when the information recording medium is inserted in the apparatus.

According to this aspect, the pick up is always placed on the position available to adjust, so that if the information recording medium has a recording area where no information is recorded is used for the apparatus, the adjustment is adequately executed at each information recording medium.

In another aspect of the apparatus for adjusting a bias voltage of a focus error signal, the control device controls the devices such that processing on the basis of a result of the discrimination by the discrimination device is executed every time when the instruction of reproduction is outputted while the information recording medium is inserted in the apparatus.

According to this aspect, the pick up is always placed on the position available to adjust, so that if the information recording medium has a recording area where no information is recorded is used for the apparatus, the adjustment is adequately executed at each information recording medium.

In another aspect of the apparatus for adjusting a bias voltage of a focus error signal, the control device controls the devices such that processing on the basis of a result of the discrimination by the discrimination device is executed every time when the power supply of the apparatus is turned on while the information recording medium is inserted in the apparatus.

According to this aspect, the pick up is always placed on the position available to adjust, so that if the information recording medium has a recording area where no information is recorded is used for the apparatus, the adjustment is adequately executed at each information recording medium.

In another aspect of the apparatus for adjusting a bias voltage of a focus error signal, the detecting device detects a starting position of a continuous area having a predetermined size in an information recording area of the information recording medium as the position available to adjust.

According to this aspect, the pick up is always placed on the position available to adjust, so that if the information recording medium has a recording area where no information is recorded is used for the apparatus, the adjustment is adequately executed at each information recording medium.

In another aspect of the apparatus for adjusting a bias voltage of a focus error signal, the detecting device detects the starting position of the continuous area as the position available to adjust if a size of an area where no information is recorded in the continuous area is within a predetermined range.

According to this aspect, the pick up is always placed on the position available to adjust, so that if the information recording medium has a recording area where no information is recorded is used for the apparatus, the adjustment is adequately executed at each information recording medium.

The above object of the present invention can be achieved by an adjustment method of adjusting a bias voltage of a focus error signal. The adjustment method is provided with: an detecting process of detecting a position available to adjust the bias voltage of the focus error signal on the basis of an index information to indicate the relationship between information recorded on the information recording medium and its recording position; an movement control process of controlling of movement where a pick up moves to the area available to adjust corresponding to a position of the pick up; and an adjust process of starting to adjust the bias voltage from the position available to adjust.

According to the adjustment method, the detecting process detects the position available to adjust the bias voltage of the focus error signal on the basis of the index information to indicate the relationship between information recorded on the information recording medium and its recording position. Then the movement control process controls the movement where a pick up moves to the area available to adjust corresponding to a position of the pick up. For example, if the present position of the pick up is not in the position available to adjust, the pick up is moved to the position available to adjust. If the present position of the pick up is in the position available to adjust, the pick up is not moved. Further the adjust process starts to adjust the bias voltage from the position available to adjust.

Therefore the pick up is always placed on the position available to adjust, so that if the information recording medium has a recording area where no information is recorded is used, the adjustment is adequately executed at each information recording medium.

In one aspect of the adjustment method, the discrimination process discriminates varieties of the information recording medium. Then if a result of the discrimination indicates that the information recording medium is a recordable medium, the control process controls the detection of the position available to adjust, the control of the movement, and the adjustment of the bias voltage at the position available to adjust and following area

According to this aspect, the pick up is always placed on the position available to adjust, so that if the information recording medium has a recording area where no information is recorded is used, the adjustment is adequately executed at each information recording medium.

In another aspect of the adjustment method, if a result of the discrimination indicates that the information recording medium is a read-only medium, the control process controls the adjust process such that the adjustment executed at the position available to adjust where the pick up exists at the time of the discrimination.

According to this aspect, the pick up is always placed on the position available to adjust, the adjustment is adequately executed at each read-only medium which has a recording area where information is recorded.

In another aspect of the adjustment method, the control process controls said process such that processing on the basis of a result of the detection is executed every time when the information recording medium is inserted in an adjusting apparatus.

According to this aspect, the pick up is always placed on the position available to adjust, so that if the information recording medium has a recording area where no information is recorded is used for the adjusting apparatus, the adjustment is adequately executed at each information recording medium.

In another aspect of the adjustment method, the control process controls said process such that processing on the basis of a result of the detection is executed every time when the instruction of reproduction is outputted while the information recording medium is inserted in an adjusting apparatus.

According to this aspect, the pick up is always placed on the position available to adjust, so that if the information recording medium has a recording area where no information is recorded is used for the adjusting apparatus, the adjustment is adequately executed at each information recording medium.

In another aspect of the adjustment method, the control process controls said process such that processing on the basis of a result of the detection is executed every time when the power supply of the an adjusting apparatus is turned on while the information recording medium is inserted in the adjusting apparatus.

According to this aspect, the pick up is always placed on the position available to adjust, so that if the information recording medium has a recording area where no information is recorded is used for the adjusting apparatus, the adjustment is adequately executed at each information recording medium.

In another aspect of the adjustment method, the detecting process detects a starting position of a continuous area having a predetermined size in an information recording area of the information recording medium as the position available to adjust.

According to this aspect, the pick up is always placed on the position available to adjust, so that if the information recording medium has a recording area where no information is recorded is used for the adjusting apparatus, the adjustment is adequately executed at each information recording medium.

In another aspect of the adjustment method, the detecting process detects the starting position of the continuous area as the position available to adjust if a size of an area where no information is recorded in the continuous area is within a predetermined range.

According to this aspect, the pick up is always placed on the position available to adjust, so that if the information recording medium has a recording area where no information is recorded is used for the adjusting apparatus, the adjustment is adequately executed at each information recording medium.

### BRIEF DESCRIPTION OF THE DRAWINGS

FIG. 1 is a block diagram showing outline construction of an MD recording/reproducing apparatus as an embodiment of the present invention;
FIG. 2A is a view for showing outline construction of a premaster MD;
FIG. 2B is a view for showing outline construction of an information recording area of the pre-master MD;
FIG. 2C is a view for showing outline construction of a recordable MD;
FIG. 2D is a view for showing outline construction of an information recording area of the recordable MD;
FIG. 3 is a view for showing a data structure of MD in the embodiment;
FIG. 4 is a view for explaining showing fundamental principle of shock proof in the embodiment;
FIG. 5 is a view for explaining intermittent reading operation in the embodiment;
FIG. 6 is a view for explaining method of management of a recording information using UTOC of the recordable MD in the embodiment;
FIG. 7 is a flow diagram of process of adjusting a bias voltage of focus error signal in the embodiment;
FIG. 8 is a view for explaining the relationship of position between the optical pick up and the area where no information is recorded in the MD.
FIG. 9A is a view for explaining the content of TOC or UTOC corresponding to FIG. 8 (No. 1);
FIG. 9B is a view for explaining the content of TOC or UTOC corresponding to FIG. 8 (No. 2);

### DETAILED DESCRIPTION OF THE PREFERRED EMBODIMENTS

Referring to the accompanying drawings, embodiments of the present invention will be now explained. In the following explanation, the present invention is adapted for an MD recording/reproducing device having a function of bias adjustment device for adjusting a bias voltage of focus error signal automatically.

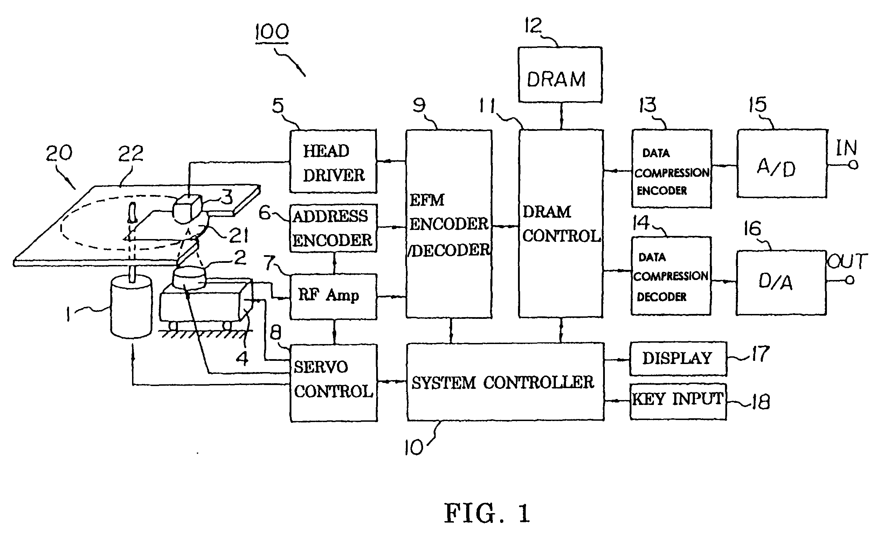

An embodiment of the MD recording/reproducing device of the present invention is explained with FIG. 1.

### [1] Outline Construction of MD recording/reproducing device

In FIG. 1, an MD 20 as an information recording medium consists of an optical disk body 21 and a cartridge 22 which protects the optical disk body 21. Several kinds of MD are available to use in this device. In this embodiment, a recordable disc for recording and reproducing using a Magneto-optical disc (MO) and a pre-master MD (music MD) in which music contents is recorded in advance only for reproduction use are used as the MD 20.

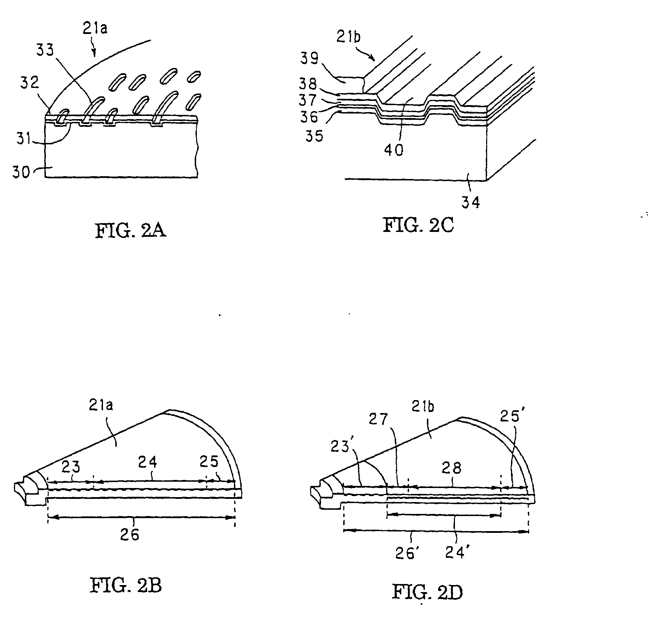

As shown in FIG. 2A, the optical disk body 21a of the premaster disc has the structure as a CD has, and includes a reflecting membrane 31 and a protecting membrane 32 on a substrate 30 constructed from poly-carbonate, recorded a line of pits 33 as is the case with the CD. Address data to indicate actual addresses is recorded in a block header of data and the like, as is the case with the CD. An area of the MD in which some information is recorded is called information area. As shown in FIG. 2B, an information area 26 of the pre-master MD consists of a lead-in area 23 in which index information of disc and the like are recorded, a program area 24 in which music information is available to be recorded, and a lead-out area 25.

On the other hand, as shown in FIG. 2C, the optical disk body 21b of the recordable disc for recording/reproducing use includes a dielectric membrane 35, an MO (Magneto-Optical disk) membrane 36, a dielectric membrane 37, a reflecting membrane 38 and a protecting membrane 39 on a substrate 34 constructed from poly-carbonate, having a guide groove 40 called pre-groove. The guide groove 40 has walls at both sides which are wobbled with an FM modulated frequency according to address information.

As shown in FIG. 2D, an information area 26' of the recordable MD consists of a lead-in area 23' in which information of disc and the like are recorded, a recordable area 24' in which information of music and index are available to be recorded, and a lead-out area 25'. The recordable area 24' consists of a UTOC area 27 in which a UTOC (User Table Of Contents) including index information is recorded and a program area 28 in which information of music and the like are recorded. The above-mentioned guide groove 40 is formed throughout recordable area 24' so that address information is available to be read out from the MD 20 even if it is a blank MD in which nothing is recorded. Further, a position of a pick up is identified by reading the address information.

Both of the pre-master MD and the recordable MD as mentioned above, are the optical disc body 21 is mounted in a cartridge 22. The back side of the cartridge has undescribed aperture for prevent form incorrect recording and another undescribed aperture for discriminate between the pre-master MD and the recordable MD. In the recordable MD the aperture for discriminate is opened, and in pre-master MD it is closed. Therefore, it is possible to discriminate between the pre-master MD and the recordable MD for MD inserted in MD recording/ reproducing device by detecting the open-close status of the aperture.

As shown in FIG. 1, an MD recording/reproducing device 100 in which the above-mentioned MD 20 is available to be inserted and ejected, includes a spindle motor 1, undrawn actuator, an optical pick up 2, and an RF (Radio Frequency) amplifier 7. The spindle motor 1 is a motor which rotates the optical disc body 21 of the MD 20 and is controlled to rotate the optical disc body 21 at a constant linear speed. The optical pick up 2 irradiates a laser beam to the optical disc body 21 which is rotated by the spindle motor 1 and outputs RF signals corresponding to reflected light of the laser beam. However, the constitution of extracting RF signals from reflected light is different depends on varieties of the MD.

In the recordable MD, digital signals "1" and "0" are converted to magnetic polarities "N" and "S", which are recorded on a recording surface of the recordable MD. When the optical pick up 2 irradiates a laser beam onto the recording surface, Kerr effect is generated on a magnetic membrane of the recording surface. The plane of polarization of reflecting light slightly rotates counterclockwise or clockwise in accordance with the magnetic polarities "N" and "S". The optical pick up 2 includes two photoreceptor devices. When the reflecting light passes through a polarization beam splitter, the amount of split to the two photoreceptor devices varies with the planes of polarization rotating in accordance with the magnetic polarity "N" or "S". Therefore digital signal "1" or "0" is available to read by obtaining the difference of output between the two photoreceptor devices in the RF amplifier 7.

On the other hand, in the pre-master MD, if a laser beam is irradiated on the pre-master MD by the optical pick up 2, the difference of the amount of reflected light is generated by diffraction which is generated at the portion having pits as is the case with the CD and at not having pits. Therefore, digital signal "1" or "0" is available to read by adding the outputs of the two photoreceptor devices in the RF amplifier 7 of the optical pick up 2.

The RF amplifier 7 includes toe kinds of operational amplifiers. One is connected to the RF amplifier 7 so as to obtain the difference of outputs of the two photoreceptor devices. Another is connected to the RF amplifier 7 so as to add outputs of the two photoreceptor devices altogether. Therefore, in the MD recording/reproducing device 100, either of operational amplifiers is selected according to the result of discrimination of the disc. Accordingly, both of the pre-master MD and the recordable MD can be reproduced.

The MD recording/reproducing device 100 includes an address decoder 6, an EFM encoder/decoder 9, a magnetic head 3, and a drive circuit for head 5.

The address decoder 6 reads address information by detecting a wobbling frequency out of an RF signal. The address decoder 6 enables reading of address in unrecorded area of the optical disc body 21 and, detecting the position of the optical pick up 2. In the pre-master MD, address information is recorded in the block header and the like of data as is case with a CD-ROM, so that reading the address information is done by reading the header and the like.

The EFM encoder/decoder 9 has both functions of an EFM (Eight to Fourteen Modulation) encoder and an EFM decoder. At the time of recording information, The EFM encoder/decoder 9 works as the EFM encoder and modulates a signal to be recorded with an EFM signal. However, in the recordable MD magnetic modulation scheme is adopted against optical modulation which is adopted in a CD-R and etc. Therefore the modulated signal is provided to the head drive circuit 5. On the other band, at the time of reproducing information the EFM encoder/decoder 9 works as the EFM decoder and extracting an EFM signal from an RF signal amplified by the RF amplifier 7 to demodulate it.

The head driver circuit 5 drives a magnetic head 3 on the basis of recording signal EFM modulated. Once laser beam is irradiate to a spot on magnetic membrane of the MD 20 by the optical pick up 2, the spot is heated to more than Curie point. Then the magnetic head 3 magnetizes the spot in the magnetic orientation on the basis of EFM modulated recording signal.

As mentioned above, the MD recording/reproducing device 100 writes information to the recordable MD in magnetic modulation. In case of using optical modulation, pits are formed on a recording medium by a laser beam irradiation. One portion of the pits which are initially irradiated becomes small, however, the other portion which is latterly irradiated becomes large. Therefore the pits are likely to be formed in tear-drop shape. This often results in cause of jitter given at the reading a signal. On the other hand, in using magnetic modulation, a laser diode just keeps on irradiating at a constant power, so that a symmetric pattern in which N pole and S pole get lined up consecutively is formed. This has an important advantage of being highly resistant to a tilt of a disc.

The MD recording/reproducing device 100 includes a DRAM 12, a DRAM control circuit 11, an A/D converter 15, a data compression encoder 13, a data compression decoder 14, and a D/A converter 16.

The DRAM 12 is temporary memory storing information data whose amount is about 1 M bit during reproduction and record. The DRAM 12 is used for prevention of interruption of reproduction which is happened because of shock and the like. This is called shock proof memory.

The DRAM control circuit 11 controls input/output of data from/to the DRAM 12 by outputting a predetermined control signal to the DRAM 12. During reproduction, the DRAM control circuit 11 input decoded data from the EFM encoder/decoder 9 and write it to the DRAM 12. Further, as necessary, the DRAM control circuit 11 outputs the data to the data compression encoder (ATRAC encoder) 13. During record, the DRAM control circuit 11 writes the data inputted from the data compression decoder (ATRAC decoder) 14 to the DRAM 12, and as necessary, outputs it to the EFM encoder/decoder 9. The system controller 10 controls the DRAM control circuit 11 in timing with reading data out of the optical disc body 21 and writing it to the optical disc body 21. The system controller 10 monitors a free space of the DRAM 12 and the amount of stored data in the DRAM 12 through the DRAM control circuit 11. If the free space goes out of the DRAM 12 during reproduction, the system controller 10 temporarily suspends data-reading out of the optical disc body 21. Then if the free space increases up to more than a predetermined amount, the system controller 10 restarts the data-reading. If the amount of stored data is more than a predetermined level during recording, the system controller 10 writes data to the optical disc 21. If the amount of stored data is less than a predetermined level, the system controller 10 suspends data-writing to optical disc 21.

The A/D converter 15 converts an analog information signal inputted out of an external during recording into a digital signal. In this embodiment a sampling frequency of 44.1 kHz is used for A/D converter 15.

The data compression encoder 13 compresses data by using ATRAC (Adaptive Transform Acoustic Coding) system. In the ATRAC system the amount of data is reduced up to one-fifth of the original information amount. In the ATRAC system the amount of converted digital signal is compressed by using threshold of hearing characteristics of human being's ear and masking characteristics of hearing without thinning out data simply.

The data compression decoder 14 decompresses the data, which is read out of the optical disc body 21 and EFM modulated during reproduction, by reversing the procedure of compression in ATRAC system, and outputted a digital audio signal.

The D/A converter 16 converts a decoded digital audio signal into an analog signal.

The MD recording/reproducing device 100 includes a carriage 4, a spindle motor 1, a servo-control circuit 8 and a system controller 10.

The carriage 4 moves the optical pick up 2 and the magnetic head 3 to the direction of the radius of the optical disc body 21. The magnetic head 3 is attached to the optical pick up 2 through an arm. The magnetic head 3 and the optical pick up 2 face each other through the optical disc 21 and move together. In this manner it is available to set up the magnetic head 3 and the optical pick up 2 in the position opposed to a requested address on the optical disc 21. It is also available to read and write data in the position with reliability.

The spindle motor 1 rotates the optical disc body 21 at a constant velocity. The spindle motor 1 is controlled by the servo-control circuit 8.

The servo-control circuit 8 controls the carriage 4, the spindle motor 1, and undescribed actuator by using servo system. The servo-control circuit 8 receives an RFsignal from the RF amplifier 7, and extracts a control signal from the RF signal, and sends the control signal to control the carriage 4 and the undescribed actuator. In this manner the servo-control circuit 8 accomplishes tracking-servo operation to keep a spot of a laser beam on the recording track line of the optical disc body 21. Further, the servo-control circuit 8 extracts a control signal from the RF signal, and sends the control signal to control the undescribed actuator. In this manner the servo-control circuit 8 accomplishes focusing-servo operation to keep irradiation of a laser beam on the focusing position of the optical disc body 21. Moreover, the servo-control circuit 8 sends the control signal on the basis of a clock signal included in an EFM signal from the EFM encoder/decoder 9 to rotate the spindle motor 1 at a constant velocity. In this manner the servo-control circuit 8 accomplishes spindle-servo operation.

The system controller 10 is a main controller of the MD recording/reproducing device 100. Every command to the system controller 10 for operation is given by a key input device 18. The system controller 10 sends control signals to devices in the MD recording/reproducing device 100 on the basis of the commands outputted from the key input device 18, and let the devices accomplish fast-search operation or random access reproduction and the like. The operation status of the MD recording/reproducing device 100 is displayed on the display 17.

### [2] Recording/Reproducing System of MD recording/reproducing device

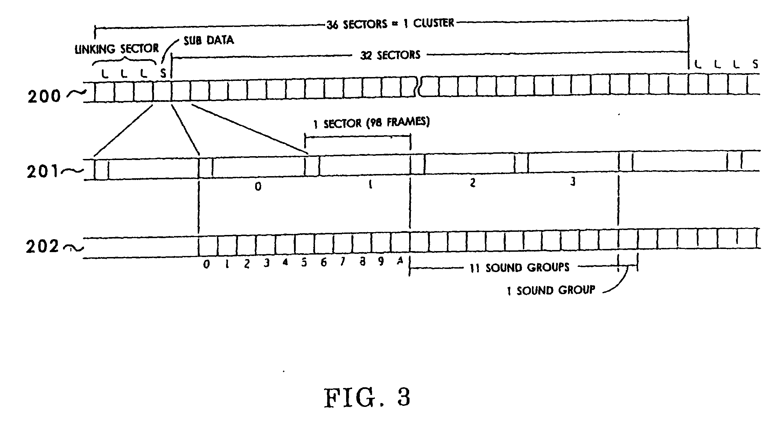

Referring to Fig. 3, structure of data applied in the MD will be now explained. In the recordable MD, the CD-ROM standard is adopted for data format. As shown in diagram 201 of FIG. 3 one sector comprises of 98 frames. As shown in diagram 202 of FIG. 3, in the MD, a sound group is defined as minimum unit of compression data. As shown in diagram 202 of FIG. 3 one sector is divided into .5 sound groups (Two sectors are divided into 11 sound groups). As shown in diagram 200 of FIG. 3 one cluster comprises of 36 sectors in total, which is divided into 32 sectors, linking area of 3 sectors, and sub code of 1 sector. The one cluster is the minimum unit of recording. Reading is accomplished every one sector.

On the other hand, the pre-master MD does not have a linking area which links recording data, so that data is consecutively recorded as is case with the CD. The area corresponding the linking area of 3 sectors in the recordable MD is used for sub code, so that sub code consists of 4 sectors in the pre-master MD.

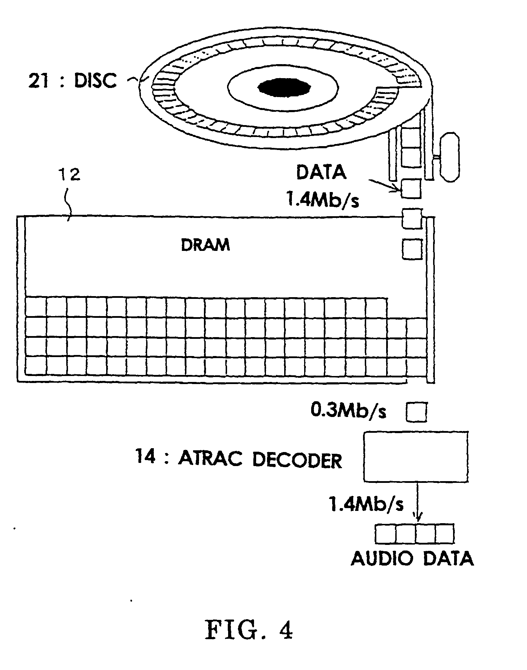

In the MD recording/reproducing device 100 the information recorded on the optical disc body 21 is read out at a data transmission rate of 1.4 Mb/s, and recorded on the DRAM 12, as shown of FIG. 4. However, the information is compressed down to one-fifth of the original information amount at the time of recording by the data compression decoder (ATRAC decoder) 14. If the amount of data read out at about 0.3 Mb/s, which corresponds to one-fifth of the data read out at about 1.4 Mb/s, is obtained, it is available to reproduce musical signals. Therefore reading of information from the DRAM 12 is accomplished at 0.3 Mb/s. Since there is difference between a data transmission rate for writing to the DRAM 12 and reading from the DRAM 12, it is available to temporarily store information read from the optical disc in the DRAM 12, and sequentially read the stored information to reproduce. For example, in case that the capacity of the DRAM 12 18 1 Mbit, it is available to store information, whose amount is the equivalent of about 3 seconds on reproduction time basis, in the DRAM 12. Therefore if a spot of laser beam goes off position on track because of movement of the optical pick up 2 by given vibration, it is possible to prevent the interruption of reproduction by putting the spot on the track during reproducing stored signals. In this manner shock proof mechanism is configured.

However if there is difference between transmission rate of writing information to the DRAM 12 and reading information from the DRAM 12, an overflow occurs in the DRAM 12 by reading information continuously from the optical disc body 21. For example, in case that the capacity of the DRAM 12 is 1 Mbit, the DRAM 12 becomes full at 0.9 second.

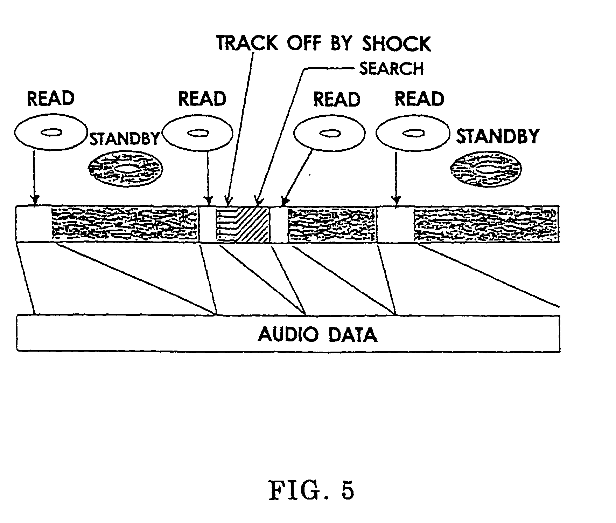

Consequently, in the MD recording/reproducing device 100, as shown in FIG. 5, after reading information from the DRAM 21 in a certain period, the amount of information stored in the DRAM 12 is controlled by suspending the reading in a predetermined period. The amount of reading and the period of suspending are out of standardization, therefore it is possible to design them as appropriate in accordance with capacity of memory and the like. That is, in the MD recording/reproducing device 100 intermittent reading is executed. Further, as shown in FIG. 5, in case that the spot goes off the position on the track because of disturbance in suspending period, desired track is immediately searched by using address information. Then if the spot is put on the track, the reading restarts.

During recording, as in the case of reading, the information to be recorded is converted into digital output at a sampling frequency of 44.1 kHz and with 16 bits for quantization. Then the information is compressed down to one-fifth of the original information amount, and temporarily stored in shock proof memory at about 300 kb/s. Further, the data read out of memory at a data transmission rate of 1.4 Mb/s is recorded in the disc rotating at more than four times rate of data transmission.

Therefore, even in recording, after recording data in the DRAM 21 in a certain period, the recording is suspended until next data is stored in the DRAM 12. At the time of storing the prescribed amount of data, the next recording restarts. That is, in the MD recording/reproducing device 100 intermittent recording is executed.

Further, in case of correct operation with no vibration, consecutive recording is executed in every cluster. During recording, address information and the like of the MD are always monitored, if the optical pick up 2 and the magnetic head 3 go off the recording track and the like, and under the prescribed condition, the recording is immediately suspended and re-recording (retry) is executed from head of the cluster again. Therefore the data of more than one cluster is stored in the DRAM 12 at lowest.

As shown in FIG. 2B, D, an MD, even if it is the pre-master MD, is provided with a lead-in area at its most inner circumferential portion. At the lead-in area a TOC (Table Of Contents) is previously recorded by using pits.

The TOC of the pre-master MD includes an address table area, called as track allocation table, which is used for accessing to tunes (tracks). The TOC includes information of start addresses and end addresses corresponding to 255 tunes (tracks). That means in the pre-master MD an index information is obtained from the TOC.

On the other hand, a TOC of the recordable MD includes information about the power of laser which is necessary for recording, a recordable area, the address of a UTOC (User Table Of Contents) and the like. As shown in FIG. 2 C, a UTOC is recorded at a UTOC area 27 which is in recordable area, and includes the index information.

As shown in FIG. 3, a cluster has a linking sector to link the clusters. Because in the recordable MD intermittent recording is executed by a cluster unit, and it is necessary to link each cluster with accurate. Therefore, the linking sector includes the portion called as link P (Pointer), in which an address of the next cluster is recorded. Accordingly, in the recordable MD, each cluster does not need to be recorded consecutively along the time base, and can be recorded such that it has discontinuous addresses.

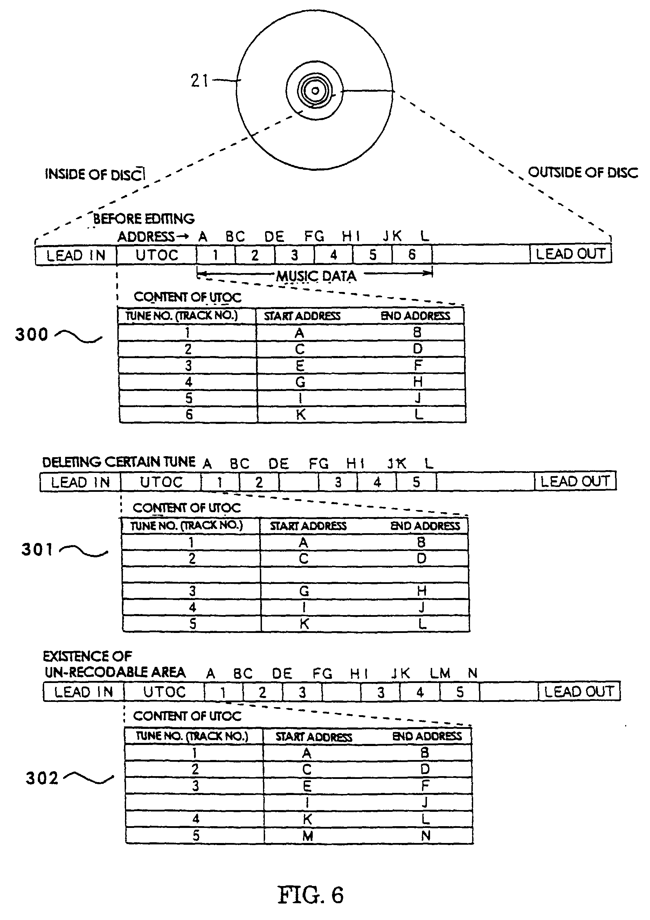

For example, in the recordable MD, as shown in diagram 300 of FIG. 6, in case that tunes are consecutively recorded from the first tune (Track No. 1) to the sixth tune (Track No. 6), the processing when the third tune (Track No. 3) is deleted will be explained as follows: In this case, it is not necessary to move data which is from the forth one to the sixth one. Simply, the areas in the UTOC to indicate track number of the third tune and to indicate the start address and the end address are made blanks. The track numbers of tunes which are from the forth tune to the sixth tune are renumbered to new ones which are from three to five. As a result of this kind of processing, free spaces not to be accessed in the disc at address E to F are generated. However, as mentioned above, the intermittent reading is executed by using the DRAM 12, reproduction is performed from the second tune to the third tune without generating time lag. In this case music information is remained in the free spaces without being deleted. However, the free spaces can be overwritten by new music information, so that the free spaces are not wasted.

Next, the processing when there is a unrecordable area in part of the record area will be explained as follows: For example, as shown in diagram 302 of FIG. 6C, it is possible to record correctly until partway of the third tune at the addresses E to F. However if there is a dust, damage or the like at the addresses G to H, it is not possible to record correctly there. Therefore, the rest of music information are recorded in the areas at the addresses I to K. As a result, the address information written in the UTOC about the third tune is divided into two parts. If that situation is happened at the time of the first recording to the recordable MD, no music information is recorded in the areas at the addresses I to K, and the portion which has missing information is generated. That is, the clusters of which the third tune to be recorded as mentioned above consists are not physically continuous. However, the intermittent reading is executed and each clusters are linked by the link P as mentioned above, so that the third tune can be reproduced as if they were continuously recorded.

### [3] Focus Bias Adjusting System of MD recording/reproducing device

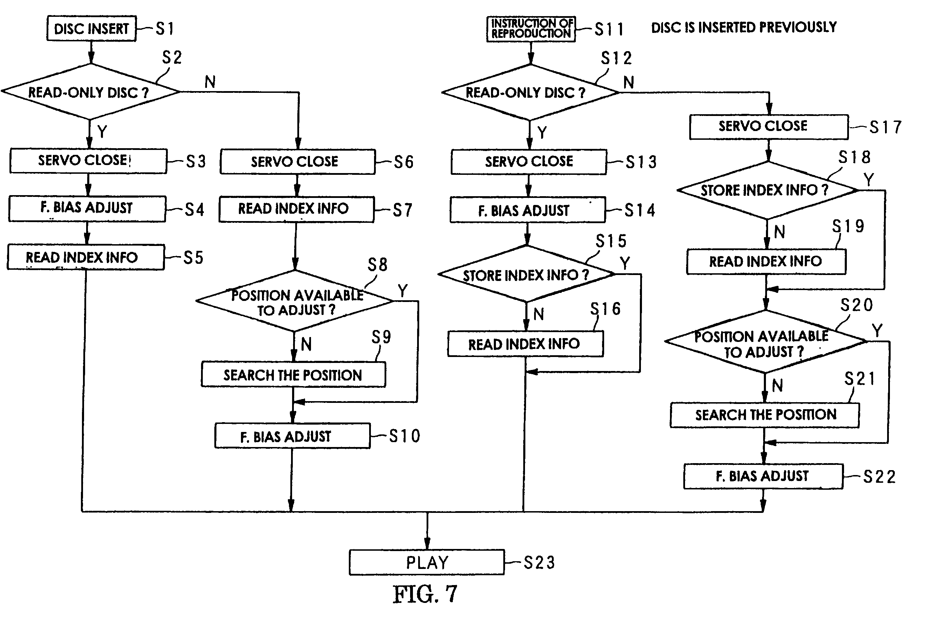

Referring to Fig. 7, 8, and 9 system of adjusting a bias voltage of a focus error signal will be now explained.

The system adjusting a bias voltage of a focus error signal means that DC offset voltage is added to the signal regarding focus in the focus closed status when focus is not achieved at the recording surface of the MD because the recording surface is not in proper alignment with the light beam under reading properties. The adjustment can be executed on the basis of the level of a jitter signal, focus error signal, or tracking error signal. However, in this embodiment, the adjustment can be executed on the basis of the level of an RF signal. The adjustment on the basis of an RF signal needs to adjust the level of an RF signal while giving disturbance to the focus error signal. Therefore, Continuous recording area corresponding to data recorded at five addresses on the optical disc body converting to address. However, in the recordable MD there may be the case no data is recorded, and the portion which has missing information may be generated, so that there are not always continuous recording area corresponding to data recorded at five addresses. On the other hand, the pre-master MD has always continuous recording area corresponding to data recorded at five addresses. If a power supply regarding turns on, it is possible to adjust the bias voltage on the basis of the level of an RF signal.

Therefore, in this embodiment, processing of adjusting a bias voltage of a focus error signal is executes according to varieties of the MD which is used for the MD recording/reproducing device 100 as follows. The processing of each case will be explained respectively.

In the first the case that the power supply regarding reproduction and record parts in the MD recording/ reproducing device is off and the MD is not inserted in it will be explained. As shown in FIG. 7, if the MD is inserted in the MD recording/reproducing device 100 (Step S1), the system controller 10 controls such that the power supply regarding reproduction and record parts turns on when it was off, and determined if the inserted the MD is the pre-master MD or the recordable MD (Step S2). In the MD recording/reproducing device 100 of this embodiment, even though the power supply of the device is off, the power is applied only to the system controller 10. Therefore, it is possible to detect of insertion of the MD. Further, the reproduction and record parts means the parts except for the system controller 10 in FIG. 1.

The varieties of discs can be discriminated by the aperture for discrimination of disc formed on the cartridge 22 as mentioned above. The MD recording/reproducing device 100 has a sensor for detecting the varieties of discs in disc inserting part. The system controller can detect the varieties of discs according to the output of the sensor. If the aperture is open, the inserted MD is a recordable MD. If not, it is the pre-master MD.

As a result of the detection, if the inserted MD is the premaster MD (Step S2; Y), the system controller 10 controls the servo control circuit 8 such that the servo systems regarding spindle, tracking, and focus become all closed (Step S3). When they are just closed, the adjustment of a bias voltage of focus error signal is executed (Step S4).

The method of the adjustment is not limited to certain one. The conventional methods can be used. For example, one method is disclosed in Japanese Laid Open H09-237424. In this method, the focus point is vibrated on the basis of a focus error signal combined with a disturbance signal. The amount of the error is detected on the basis of the amplitude of an RF signal obtained at the time of vibration. The bias voltage is calculated on the basis of the detected amount of the error, a gain of a pre-amplifier in focus servo group, sensitivity of the optical system. The adjustment is executed on the basis of the calculated bias voltage. Specifically, The adjustment is executed such that the amplitude of an RF signal becomes maximum.

In this method, continuous recording areas corresponding to at least five addresses are needed to obtain an RF signal which is needed to adjust the bias voltage. However, if the inserted MD is the pre-master MD, every recording area has the continuous recording areas corresponding to at least five addresses. Therefore, it is possible to adjust the bias voltage of focus error signal wherever the optical pick up 2 exists.

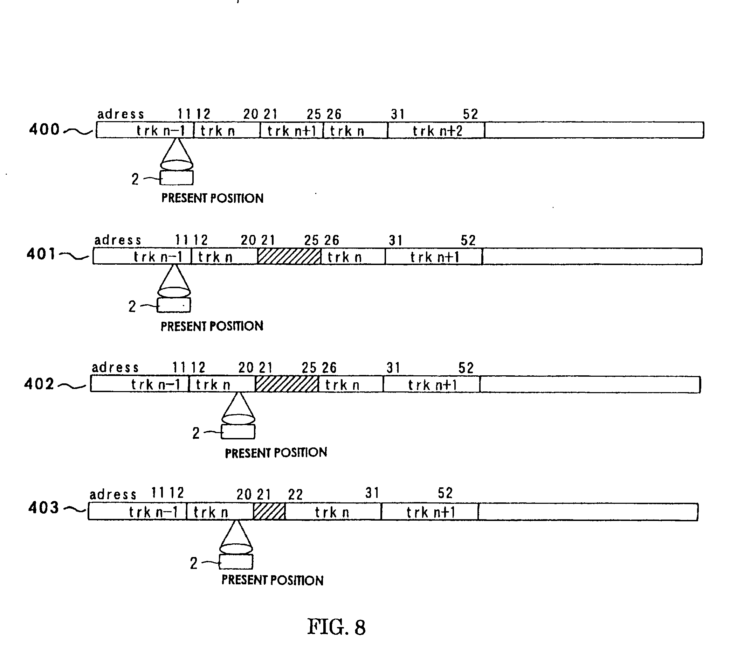

In FIG. 8, the recording area is described as a broad line as is case with FIG. 6. A track number is attached in the area which music information is recorded. Hatched lines are given in the area which no information is recorded.

In diagram 400 of FIG. 8, the position of the optical pick up 2 at the time of inserting the pre-master MD corresponds to address 11, which is the end address of the (n-1)th track (trkn-1). Therefore, a laser beam is irradiated to this position of the address 11 by the optical pick up 2. Then the adjustment is started. After that, the adjustment carries on until the adjustment area becomes address 15. When the optical pick up 2 reaches address 16, the adjustment is ended.

After the adjustment is ended as mentioned above, the index information is read from the TOC of the pre-master MD (Step S5), reproduction is performed (Step S23). As mentioned above, the MD recording/ reproducing device 100 starts to reproduce information by insertion of the MD disc.

Next, in the Step S2, if the system controller 10 determines that the recordable MD is inserted (Step S2; N), the system controller 10 controls the servo control circuit 8 such that the servo systems regarding spindle, tracking, and focus become all closed (Step S6). After they are just closed, the system controller 10 read the index information from the UTOC of the recordable MD and memorizes it in a memory in the system controller 10 (Step S7). This processing is executed in order to grasp the position of the optical pick up 2 and search the position which is available to adjust. That is, as shown in diagram 401 of FIG. 8, the recordable MD does not always have the continuous recording areas corresponding to five addresses, so that has the portion in which no information is recorded. Therefore, the system controller 10 confirm the position of the optical pick up 2 and its present address. Then the system controller 10 determined if the area indicated by the present address is the one which is available to adjust, i.e., the continuous recording areas corresponding to five addresses, according to the index information which is recorded in the UTOC (Step S8). The continuous recording area means the area where information is recorded physically and that is continuous without reference to reproduction order.

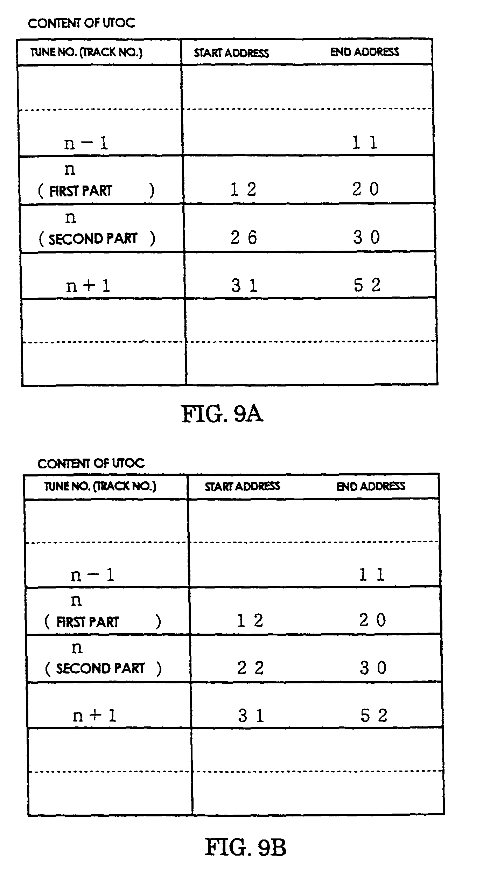

For example, as shown in diagram 401 of FIG. 8, tracks which are from track n-1 to track n+1 are recorded in the recordable MD, and addresses which are from address 21 to address 25 are the no-information area where no information is recorded. The content of the UTOC is shown in FIG. 9A.

If the position of the optical pick up 2 at the time of insertion of the recordable MD is the area at address 11 as shown in diagram 401 of FIG. 8, the system controller 10 determines if there is any no-information area within 5 addresses from the address 11 which indicates the position of the optical pick up 2 referring to the index information which is the content of the UTOC stored in the memory. First of all, the system controller 10 determines which track the address 11 to indicate the present position of the optical pick up 2 corresponds to. In FIG. 9A, the address 11 is found as the end address of track n-1. As a result, in track n-1, only the area corresponding to one address is found. Therefore, next, the system controller 10 search the address is continuous to the address 11 on the basis of the index information. In FIG. 9A, the start address of track n is the address 12. Therefore if it is possible to find the continuous areas corresponding to four addresses, the continuous areas corresponding to five address can be found in total. Accordingly the system controller 10 determines if the continuous areas exist and how many addresses the continuous areas corresponding to in track n on the basis of the end address of track n and the start address in the index information. In FIG. 9A, the continuous areas corresponding to nine addresses are found in track n. Therefore, in this case, the present position of the optical pick up 2 is determined to the position which is available to adjust the bias voltage.

After determining that the present position is the one which is available to adjust (Step S8 ;Y), the system controller 10 adjusts the bias voltage of focus error signal by using the areas at the address 11 to 15 as is case with the pre-master MD (Step S10), and reproduces information according to the instruction of reproduction (Step S23).

Next, as shown in diagram 402 of FIG. 8, in case that the position of the optical pock up 2 at the time of insertion of the recordable MD is address 20, which is the position just before no-information areas corresponding to more than two addresses, from address 21 to address 25, the adjustment processing will be explained as follows:

The content of the UTOC is the same as the above-mentioned case, and shown in FIG. 9A. The inserted MD is the recordable MD, so that the process from Step S1 to Step S7 is performed as is the case with the above-mentioned.

In Step S8 the system controller 10 determines which track the address 20 to indicate the present position of the optical pick up 2 corresponds to. According to the content of the UTOC as shown in FIG. 9A, the address 20 is found as the end address of the track n. As a result, in track n, only the area corresponding to one address is found. Therefore, next, the system controller 10 searches the address is continuous to the address 20 on the basis of the content of the UTOC. In FIG. 9A, the address has the next greater value of address than that of the address 20 is found as the address 26. The system controller 10 determines how much, size of the no-information area to exist from the address 21 is according to calculating the difference between the address 26 given as a result of the search and the address 21 next to address 20. Consequently the size of the no-information area is found as the one corresponding to five addresses. In this case there are the no-information areas corresponding to more than two addresses within five addresses from the present position of the optical pick up 2. Accordingly, if the adjustment is executed at the position, even though an RF signals corresponding to one address can be obtained at the address 20, Any RF signals can not be obtained in the long period corresponding to five addresses at the address 21 and the following addresses. Therefore the adjustment can not be adequately executed in this case. Consequently, in this case, the system controller 10 determines that the present position of the optical pick up 2 is not the position which is available to adjust the bias voltage (Step S8; N), and search the position which is available to adjust, and moves the optical pick up 2 to the position (Step S9).

There are two ways to search the position which is available to adjust. One way is to search the position to the direction where the number of the address becomes smaller. Another way is to search the position to the direction where the number of the address becomes greater. The search is executed by referring the content of the UTOC in each way. In the former way the address 20 to indicate the present position of the optical pick up 2 is found as the end address of track n, so that the start address is read from the content of the UTOC, and determines if the continuous areas exists in track n and how many addresses the continuous areas corresponds to. In FIG. 9A the continuous areas corresponding to nine addresses can be found in track n. Therefore the system controller 10 moves the optical pick up 2 to the position at the address 12, which is the start address of track no, or to position at the address 16, which is five address back from the address 20. In the later case, there are the no-information areas from the address 21 to address 25, and the start address of the second part of track n is found as the address 26, and an existence of the areas which is available to adjust is found at the address 26 and the following addresses. Therefore the system controller 10 determines if the continuous areas exists in the second part of track n and how many addresses the continuous areas corresponds to. In FIG. 9A the continuous areas corresponding to five addresses exist in the second part of the track n, so that the system controller 10 moves the optical pick up 2 to the address 26, which is the start address of the second part of the track n. After moving the optical pick up 2 to the position which is available to adjust, the system controller 10 adjusts the bias voltage of focus error signal as is case with the above-mentioned (Step S10), and reproduces information according to the instruction of reproduction (Step S23).

Next, as shown in diagram 403 of FIG. 8, in case that the position of the optical pick up 2 at the time of insertion of the recordable pick up 2 is at the address 20, and this position is just before the no-information area, and the size of the no-information area is the one corresponding to one address, the adjustment processing will be explained as follows:

The content of the UTOC at this case is shown in FIG. 9B. The inserted MD is the recordable MD, so that the process from Step S1 to Step S7 is performed as is the case with the above-mentioned.

In Step S8 the system controller 10 determines which track the address 20 to indicate the present position of the optical pick up 2 corresponds to. According to the content of the UTOC as shown in FIG. 9B, the address 20 is found as the end address of the track n. As a result, in track n, only the area corresponding to one address is found. Therefore, next, the system controller 10 searches the address is continuous to the address 20 on the basis of the content of the UTOC. In FIG. 9B, the address has the next greater value of address than that of the address 20 is found as the address 22. The system controller 10 determines how much size of the no-information area to exist from the address 21 is according to calculating the difference between the address 22 given as a result of the search and the address 21 next to address 20. Consequently the size of the no-information area is found as the one corresponding to one address.

In this case there is the no-information area corresponding to one address, so that if the continuous areas corresponding to three addresses are found after the no-information area, the adjustment can be executed in the recording area corresponding to four addresses from the start of the adjustment to the end of it. Therefore the adjustment is adequately executed without practical trouble.

The system controller 10 read the address 30 which is the end address of the track n whose start address is the address 20, and calculate the size of the continuous areas which is available to adjust in the second part of track n. As a result, it is found that the second part of the track n has the continuous areas whose size is the one corresponding to nine addresses.

Consequently, in this case, the system controller 10 determines that the present position of the optical pick up 2 is the position which is available to adjust the bias voltage (Step S8; Y), and adjusts the bias voltage of focus error signal as is case with the above-mentioned (Step S10), and reproduces information according to the instruction of reproduction (Step S23).

In case the system controller 10 starts to adjust at the address 20, RF signals corresponding to one address can be obtained at the address 20, but any RF signals can not be obtained at the address 21. However RF signals corresponding to three addresses can be obtained at the address 22 to address 24. Therefore the adjustment can be adequately executed without practical trouble.

Next, in case that the MD is already inserted in the MD recording/reproducing device 100, and the instruction of the reproduction is outputted due to the other factor except for insertion of the MD, the adjustment processing will be explained as followed.

Specifically, the instruction is outputted when a reproduction switch of a key input 18 is pressed in the suspending state after reproduction was finished, or when the power supply of the MD recording/reproducing device 100 is turned on under the condition the power supply was off while the MD was inserted in the MD recording/reproducing device 100.

If the instruction of reproduction is outputted by pressing the reproduction switch or turning the power supply on (Step S11), the system controller 10 detects the varieties of MD which is already inserted (Step S12). This detection is executed on the basis of the output of the sensor for detecting the varieties of discs.

As a result of the detection, if the inserted MD is the premaster MD (Step S12; Y), the system controller 10 controls the servo control circuit 8 such that the servo systems regarding spindle, tracking, and focus become all closed (Step S13). When they are just closed, the adjustment of the bias voltage of focus error signal is executed as is case with above-mentioned (Step S14). Since the premaster MD does not have the no-information area as the recordable MD has, and can assure the continuous areas which are available to adjust and corresponds to five addresses in every area, the adjustment is immediately executed without reading the index information from the TOC of the pre-master MD, or detecting the position of the optical pick up 2.

After the adjustment is finished, the system controller 10 reads the index information from the TOC. However, if the system controller 10 has already read the index information from the TOC or UTOC of the MD inserted in the MD recording/reproducing device 100 and memorizes it in the memory at this time, it is not necessary to read it redundantly. For example, if the instruction of the reproduction is outputted when the reproduction switch is pressed in the state of stand-by of reproduction, it is not necessary to read the index information from the TOC or the UTOC. On the other hand, in case that the DRAM is used for the memory, since the content of the TOC or the UTOC stored in the memory is lost when the power supply of the MD recording/reproducing device 100 while MD is inserted in it is turned off, it is necessary to read the index information from the TOC or the UTOC before reproduction starts. For example, in case that the power supply of the MD recording/reproducing device 100 while the MD is inserted in it is turned off, and the instruction is outputted when the power supply is turned on after that, it is necessary to read the index information from the TOC or the UTOC before reproduction starts.

Consequently, in the MD recording/reproducing device 100, the system controller 10 sets a flag at the time reading the index information from the TOC or the UTOC, and resets the flag when the power supply is turned off. Therefore, information to indicate whether the index information is already read from the TOC or the UTOC of MD.

Accordingly, if the system controller 10 reads the index information after the adjustment is finished, the system controller 10 determines if the flag is set or reset to determine whether the index information is already read or not (Step S15).

As a result, if the flag is set, the system controller 10 determined the index is already read (Step S 15; Y). Therefore the system controller 10 executes the reproduction without reading the index again (Step S23). If the flag is reset, the system controller 10 reads the index information from the TOC (Step S16), and executes the reproduction

Next, in Step S12, if the MD inserted in the MD recording/reproducing device 100 is determined as the recordable MD when the instruction of the reproduction (Step S12; N), the system controller 10 controls the servo control circuit 8 such that the servo systems regarding spindle, tracking, and focus become all closed. After they are just closed (Step S17), the system controller 10 determines if the index information is already read from the UTOC or not due to the flag (Step S18). For example, if the instruction of the reproduction is outputted when the reproduction switch of the key input device 18 is pressed in the state of stand-by of reproduction, it is not necessary to re-read the index information from the UTOC. On the other hand, in case that the power supply of the MD recording/reproducing device 100 is turned off while the MD is inserted in it, and the instruction is outputted when the power supply is turned on after that, it is necessary to read the index information from the UTOC.

As a result of the determination, if the flag is set, the system controller 10 determined the index information is already read (Step S18; Y). Therefore the system controller 10 determines if the optical pick up 2 is in the position which is available to adjust (Step S20). On the other hand, if the flag is reset, the system controller 10 reads the index information from the UTOC (Step S19), and determines if the optical pick up 2 is in the position which is available to adjust (Step S20).

Since there is the no-information area which is not available to adjust in the recordable MD, the above-mentioned determination of the position of the optical pick up 2 is necessary. The determination is done on the basis of the address to indicate the position of the optical pick up 2 and the read content of UTOC by detecting the no-information area within the areas corresponding to five addresses from the address.

As shown in diagram 401 and 402, the system controller 10 determines the optical pick up 2 is in the position which is available to adjust (Step S20; Y), the adjustment is executed in the position (Step S22).

On the other hand, in case as shown in diagram 402 of FIG. 8, the system controller 10 determines the optical pick up 2 i not in the position which is available to adjust (Step S20; N), the system controller 10 searches the position which is available to adjust (Step S21), and the adjustment is executed in the position (Step S22).

As mentioned above, in the MD recording/reproducing device 100, the adjustment of the bias voltage of the focus error signal can be executed for each disc respectively even for the recordable MD which has the no-information area. Therefore if there are varieties of properties of reproduction signals by each disc, the proper focus error signals can be obtained according to RF signals. Accordingly the servo control can be executed with accuracy. As a result, reproduction can be correctly executed with good S/N rate

In the above-mentioned embodiment, the adjustment is executed only at the time of reproduction. However, the invention is not limited in this embodiment, the adjustment may be executed at the time of recording. In case of recording, no music information may be recorded in the rcordable MD. However, in this case, the adjustment can be executed by using TOC area of LEAD IN area 23', because information is continuously recorded in the TOC area corresponding to more than five addresses.

In the above-mentioned embodiment, the flag is reset before the power supply is turned off. However, the invention is not limited in this embodiment, for example, by using nonvolatile memory as the memory in which the content of the TOC or the UTOC is recorded, the content of memory is not lost. Therefore the operation of the flag, the process of Step S15, S16, S18, and S19 become unnecessary.

In the above-mentioned embodiment, the power supply is turned on and the instruction of reproduction is outputted at the time which the MD is inserted in. The invention is not limited in this embodiment. The insertion of the MD may be independent of switching of the power supply and outputting the instruction of reproduction. For example, the power supply may be switched by operation of power switch. The instruction of reproduction may be outputted by operation of reproduction switch. However, even in this case, it is necessary to read the content of the TOC or the UTOC every insertion of the MD.

In the above-mentioned embodiment, the areas corresponding to more than five addresses are necessary to adjust. However the invention is not limited in this embodiment. The total number of the addresses can be change according to facility of means for adjusting and the like.

In the above-mentioned embodiment, the adjustment is executed on the basis of the amplitude of RF signals. However the invention is not limited in this embodiment. For example, the adjustment may be executed on the basis of the amplitude of RF signals.

In the above-mentioned embodiment, the discrimination of the varieties of discs is executed by using the aperture for the discrimination of discs. The invention is not limited in this embodiment. For example, two kinds of gains are set roughly because the reflection coefficient is different between the pre-master MD and the recordable MD. Therefore, in this case, the servo may be closed by using preset value for the pre-master MD. If the servo can not be closed, then another gain may be selected, the servo may be closed by using preset value for the recordable MD. In this manner, the servo can be always closed.

After the focus servo is closed, the TOC (using pits) can be read in each disc. Therefore, the discrimination of the discs may be executed by reading the TOC.

Further, reflection coefficient at the time of closing focus can be detected by using total amount of light. Then the discrimination of the discs may be executed by the reflection coefficient.

Tracking servo can be closed after focus servo is closed because polarity of tracking is different between the pre-master MD and the recordable MD. However, spindle servo can not be controlled (not rocked)after focus servo is closed. Consequently, the discrimination of the discs may be executed by detecting that spindle servo can not be controlled. Actually, after measuring the time that spindle servo is not rocked by counting the value of a timer, and retry in some times, discrimination of the discs may be executed.

In the above-mentioned embodiment, the invention is adopted to the MD recording/reproducing device which can do both of recording information in the MD and reproducing information recorded in the MD. However the invention is not limited in this embodiment. The invention can be adopted to the MD reproducing device which only reproduce information.

Further, in the above-mentioned embodiment, the MD is used for a recording medium. However, this invention is not restricted to the embodiment. The invention can be adopted to the device using the other recording medium, such as a CD (Compact Disc), a CD-R (Recordable CD), a CD-RW (Re-Writerable CD) and the like.

Moreover, the invention can be modified within the scope of its essential concept.

## Claims

1. An apparatus (100) for adjusting a bias voltage of a focus error signal, characterized in that said apparatus (100) comprises:
an detecting device (10) for detecting a position available to adjust the bias voltage of the focus error signal on the basis of an index information to indicate the relationship between information recorded on the information recording medium (21) and its recording position;
an movement control device (10) for controlling of movement where a pick up (2) moves to the area available to adjust corresponding to a position of the pick up (2); and
an adjust device (10) for starting to adjust the bias voltage from the position available to adjust.

2. An apparatus (100) according to claim 1, characterized in that said apparatus (100) further comprises a discrimination device (10) for discriminating varieties of the information recording medium (21); and a control device (10) for controlling the detection of the position available to adjust by the detecting device (10), the control of the movement by the movement control device (10), and the adjustment of the bias voltage at the position available to adjust and following area by the adjust device (10) if a result of the discrimination indicates that the information recording medium is a recordable medium.

3. An apparatus (100) according to claim 2, characterized in that if a result of the discrimination indicates that the information recording medium is a read-only medium, said control device (10) controls the adjust device (10) such that the adjustment is executed at the position available to adjust where the pick up exists at the time of the discrimination.

4. An apparatus (100) according to claim 2 to 3, characterized in that said control device (10) controls the devices such that processing on the basis of a result of the discrimination by the discrimination device (10) is executed every time when the information recording medium (21) is inserted in the apparatus (100)

5. An apparatus (100) according to claim 2 to 4, characterized in that said control device (10) controls the devices such that processing on the basis of a result of the discrimination by the discrimination device (10) is executed every time when the instruction of reproduction is outputted while the information recording medium (21) is inserted in the apparatus (100).

6. An apparatus (100) according to claim 2 to 4, characterized in that said control device (10) controls the devices such that processing on the basis of a result of the discrimination by the discrimination device (10) is executed every time when the power supply of the apparatus (100) is turned on while the information recording medium (21) is inserted in the apparatus (100).

7. An apparatus (100) according to claim 1 to 6, characterized in that said detecting device (10) detects a starting position of a continuous area having a predetermined size in an information recording area of the information recording medium (21) as the position available to adjust.

8. An apparatus (100) according to claim 7, characterized in that said detecting device (10) detects the starting position of the continuous area as the position available to adjust if a size of an area where no information is recorded in the continuous area is within a predetermined range.

9. An adjustment method of adjusting a bias voltage of a focus error signal, characterized in that said adjustment method comprises:
an detecting process of detecting a position available to adjust the bias voltage of the focus error signal on the basis of an index information to indicate the relationship between information recorded on the information recording medium (21) and its recording position;
an movement control process of controlling of movement where a pick up (2) moves to the area available to adjust corresponding to a position of the pick up (2); and
an adjust process of starting to adjust the bias voltage from the position available to adjust.

10. An adjustment method according to claim 9, characterized in that said adjustment method further comprises a discrimination process of discriminating varieties of the information recording medium (21); and a control process of controlling the detection of the position available to adjust, the control of the movement, and the adjustment of the bias voltage at the position available to adjust and following area if a result of the discrimination indicates that the information recording medium is a recordable medium.

11. An adjustment method according to claim 10, characterized in that if a result of the discrimination indicates that the information recording medium is a read-only medium, said control process controls the adjust process such that the adjustment executed at the position available to adjust where the pick up exists at the time of the discrimination.

12. An adjustment method according to claim 10 to 11, characterized in that said control process controls said process such that processing on the basis of a result of the detection is executed every time when the information recording medium (21) is inserted in an adjusting apparatus (100)

13. An adjustment method according to claim 10 to 12, characterized in that said control process controls said process such that processing on the basis of a result of the detection is executed every time when the instruction of reproduction is outputted while the information recording medium (21) is inserted in an adjusting apparatus (100).

14. An adjustment method according to claim 10 to 12, characterized in that said control process controls said process such that processing on the basis of a result of the detection is executed every time when the power supply of the an adjusting apparatus (100) is turned on while the information recording medium (21) is inserted in the adjusting apparatus (100).

15. An adjustment method according to claim 9 to 14, characterized in that said detecting process detects a starting position of a continuous area having a predetermined size in an information recording area of the information recording medium (21) as the position available to adjust.

16. An adjustment method according to claim 15, characterized in that said detecting process detects the starting position of the continuous area as the position available to adjust if a size of an area where no information is recorded in the continuous area is within a predetermined range.
